# EUROPÄISCHE PATENTSCHRIFT

(11) **EP 1 338 583 B1**
(45) Veröffentlichungstag und Bekanntmachung des Hinweises auf die Patenterteilung: **16.02.2005**
(21) Anmeldenummer: 02027864.4
(22) Anmeldetag: 12.12.2002
(51) Int. Cl.: C04B 35/80, C04B 35/565, C04B 35/628, C04B 35/571

(54) **Faserverbundkeramik mit hoher Wärmeleitfähigkeit**
Fibre-containing ceramic composites with high thermal conductivity
Composites céramiques contentant des fibres ayant une haute conductivité thermique

(30) Priorität: 06.02.2002 DE 10204860
(43) Veröffentlichungstag der Anmeldung: 27.08.2003
(73) Patentinhaber: MAN Technologie AG, 86153 Augsburg (DE)
(72) Erfinder: Mühlratzer, August, Dr., 81245 München (DE)
(74) Vertreter: Schwarzensteiner, Marie-Luise, Dr.

(56) Entgegenhaltungen:
- EP-A- 1 024 121
- A. LICCIULLI ET AL.: "Preparation and Characterization of SiC/C/SiC Composites by Hybrid Wet/Vapour Processing " KEY ENGINEERING MATERIALS , Bd. 127-131, 1997, Seiten 279-286, XP001148050
- ORTONA A ET AL: "SiC-SiCf CMC manufacturing by hybrid CVI-PIP techniques: process optimisation" FUSION ENGINEERING AND DESIGN, ELSEVIER SCIENCE PUBLISHERS, AMSTERDAM, NL, Bd. 51-52, November 2000 (2000-11), Seiten 159-163, XP004315159 ISSN: 0920-3796
- A. MÜHLRATZER: "Production, Properties and Applications of Ceramic Matrix Composites" CFI-CERAM. FORUM. INT.-BER. DTSCH. KERAM. GES., Bd. 76, Nr. 4, April 1999 (1999-04), Seiten 30-35, XP009010819

## Beschreibung

Die vorliegende Erfindung betrifft einen Werkstoff aus einer Faserverbundkeramik mit einer hohen Wärmeleitfähigkeit in Verbindung mit einer hohen mechanischen Festigkeit.

Faserverbundkeramiken bzw. daraus hergestellte Werkstoffe zeichnen sich gegenüber monolithischer technischer Keramik durch einen erheblich verbesserten Risswiderstand aus. Werkstoffe bzw. Bauteile aus Faserverbundkeramiken weisen daher eine erhöhte Dehnfähigkeit und damit Schadenstoleranz auf. Werden solche Bauteile jedoch erhöhten Temperaturen ausgesetzt, wie beispielsweise in Wärmekraftmaschinen, Wärmetauschern, Heißgasführungen und -düsen, wird ihre Belastbarkeit eingeschränkt, weil Wärmespannungen an bzw. in den Bauteilen auftreten. Ein wesentlicher Grund dafür ist die im Allgemeinen schlechte Wärmeleitfähigkeit der typischerweise porösen und heterogen aufgebauten Werkstoffstruktur von Faserverbundkeramiken.

Die schlechte Wärmeleitfähigkeit der Faserverbundkeramiken stellt insbesondere ein Hindernis für die Herstellung von Komponenten für Plasmaeinschlussgefäße thermonuklearer Fusionsanlagen dar, obwohl andere Materialeigenschaften sie dafür prädestinieren würden. Diese Materialeigenschaften sind die Hochtemperaturfestigkeit und Thermoschockbeständigkeit, die gute Beständigkeit gegen Plasmaeinwirkung und der Aufbau aus leichten Elementen mit rasch abklingender radioaktiver Strahlung nach der Aktivierung im Betrieb des Fusionsreaktors.

Es hat deshalb nicht an Versuchen gefehlt, die Wärmeleitfähigkeit von Faserverbundkeramiken zu verbessern.

Es wurde beispielsweise versucht, die Wärmeleitfähigkeit in der Richtung der Dicke der Struktur, was zur Vermeidung von Spannungen wesentlich ist, durch einen hohen Faseranteil von bis zu 47 % des Gesamtfasergehaltes in dieser Richtung zu erhöhen (C. A. Nanetti et al. Manufacturing of advanced three-dimensional texture SiC_{f}/SiC composites, 4^{th} IEA Workshop on SiC/SiC Ceramic Matrix Composites for Fusion Structural Applications, 12. bis 13. Oktober 2000, Frascati, Italien, Seiten 92 bis 100). Es wurden sehr dicke Faserstränge mit einer hohen Zahl von Einzelfilamenten verwendet. Das Material umfasste des Weiteren eine Matrix aus Siliciumcarbid, die teilweise durch Chemische Gasphaseninfiltration hergestellt war und teilweise aus einem Feststoff, welcher durch Pyrolyse eines siliciumhaltigen Polymeres erzeugt wurde. Die Messung der Temperaturleitfähigkeit an diesem Material ergab einen Wert von 0,03 cm²/s bei Raumtemperatur. Eine zweidimensional verstärkte SiC/SiC-Faserverbundkeramik (H. Tawil et al., Thermal diffusivity of chemically vapour deposited silicon carbide reinforced with silicon carbide fibers, J. Mater.Sci. 20 (1985) Seiten 3201 - 3212) zeigt eine Temperaturleitfähigkeit von 0,11 cm²/s. Grund dafür dürfte sein, dass die erreichte Dichte sowie der Kristallisationsgrad der von Polymeren abgeleiteten Matrix zu gering sind. Beide Größen beeinflussen die Wärmeleitfähigkeit deutlich (H. Tawil et al., ibid.).

Ortona A. et al "SiC-SiCf CMC manufacturing by hybrid CVI-PIP techniques: process optimisation", Fusion Engineering and Design, Elsevier Science Publishers, Amsterdam, NL, Bd. 51-52 beschreibt auf den Seiten 159-286 einen Werkstoff aus einem 3D-orientierten Laminat, hergestellt nach einem CVI-PIP-CVI Verfahren, wobei eine Mischung aus Organosilicium-Polymer und SiC-Nanopulver in dem PIP-Prozeß verwendet wird. Weiter ist es bekannt, dass CVI zu einer β-SiC Matrix führt. Zusätzliche Verdichtung durch CVI versiegelt Risse und Poren.

A. Licciulli et al beschreibt in "Preparation and Characterization of SiC/C/SiC Composites by Hybrid Wet/Vapour Processing", Key Engineering Materials, Bd. 127-131, 1997, Seiten 279-286 einen Werkstoff aus einer Faserverbundkeramik, die aus einem Gewebe aus dreidimensional orientierten Fasern besteht (NL 207 Nippon Carbon), einer kristallinen Matrix aus β-Siliciumcarbid, welche in einem CVI-Prozeß im Wesentlichen auf den Fasern erzeugt wird, einem Matrixanteil aus β-Siliciumcarbid, welcher in einem PIP-Prozeß, ausgehend von einer Suspension von Siliciumcarbid-Pulver in einem Polymer (PCS + β-Siliciumcarbid Nanopulver) erzeugt wird. Weiter offenbart D2 ("Conclusions"), dass eine letzte SiC-Schicht, mittels CVD Verfahren abgeschieden, die beste Kombination ergibt.

Gemäß EP-A-1 024 121 (Abbild. 1, S. 3, Z. 32 - S. 4, Z. 5) wird ein Werkstoff hergestellt mittels einem CVI-PIP-CVI-Verfahren, wobei eine Mischung von einem Organosilicium-Polymer und SiC-Pulver in dem PIP-Prozess verwendet werden kann.

Von A. Mühlratzer sind in "Production, Properties and Applications of Ceramic Matrix Composites" CFI-Ceram. Forum. Int.-Ber., Dtsch. Keram. Ges., Bd. 76, Seiten 30 bis 35 unterschiedliche Abscheideverfahren, u. a. das Gradienten-CVI-Verfahren, beschrieben.

Aber auch die Wärmeleitfähigkeit, errechnet als Produkt aus Temperaturleitfähigkeit, spezifischer Wärmekapazität und Dichte, der oben erwähnten, mittels Gasphaseninfiltration hergestellten, zweidimensional verstärkten SiC/SiC-Verbundkeramik reicht nicht aus, um die thermische Ermüdung so gering zu halten, dass sie für den Betrieb in Anlagen, von denen hohe Standzeiten verlangt werden, niedrig gering ist.

Eine den Anforderungen hinsichtlich der Wärmeleitfähigkeit weitgehend gerecht werdende Lösung wurde durch Füllung der Poren mit reaktionsgebundenem Siliciumcarbid (SiC) erreicht (R. Yamada et al., JAERI's Recent Activities on SiC/SiC Composites for Fusion, 4^{th} IEA Workshop on Si/SiC Ceramic Matrix Composites for Fusion Structural Applications, 12. bis 13. Oktober 2000, Frascati, Italien, Seiten 33 bis 41). Es ist jedoch be-kannt, dass bei der Bildung von reaktionsgebundenem SiC aus den Elementen, das bei der Reaktionstemperatur schmelzflüssige Silicium auch mit den Faseroberflächen reagiert. Dadurch werden die mechanischen Eigenschaften, insbesondere Festigkeit und Bruchdehnung, des keramischen Verbundwerkstoffes stark beeinträchtigt, d.h. die Wirkung der Faserverstärkung geht zu einem erheblichen Teil verloren. Darüber hinaus verbleibt im Werkstoff ein Restanteil an nicht abreagiertem, freiem Silicium, das in manchen Anwendungsfällen, vor allem in korrosionschemischer Hinsicht unerwünscht ist.

Aufgabe der vorliegenden Erfindung ist es daher, einen Werkstoff aus Faserverbundkeramik bereitzustellen, der eine hohe Wärmeleitfähigkeit in Verbindung mit hoher mechanischer Festigkeit aufweist und damit zur Erzeugung von Bauteilen, welche einer hohen mechanischen sowie thermischen Belastung ausgesetzt werden, geeignet ist.

Gegenstand der vorliegenden Erfindung ist somit ein Werkstoff aus einer Faserverbundkeramik, aufgebaut aus einem dichten Gewebe oder Gelege aus polykristallinen, stöchiometrisch zusammengesetzten Silicium-Carbidfasern, die bei Raumtemperatur, eine Wärmeleitfähigkeit von etwa 64 W/mk aufweisen, oder Kohlenstoff-Fasern einer thermischen Leitfähigkeit von ≥ 64 W/mK, welche dreidimensional orientiert sind, wobei das Gewebe oder Gelege mindestens 35 Vol % Fasern umfasst, wovon mindestens 10 % in Richtung der Dicke des Werkstoffes orientiert sind, einer in einem CVI-Prozess im Wesentlichen auf den Fasern erzeugten kristallinen Matrix aus β-Siliciumcarbid, einem in einem Polymerinfiltrations- und Pyrolyseprozess, ausgehend von einer Suspension von Siliciumcarbid-Pulvermit einem Korngrößenintervall von 0,3 µm bis 1,0 µm in einem Polymer, in Poren der Gewebe- bzw. Gelegestruktur erzeugten Matrixanteil aus β-Siliciumcarbidund einem in einem CVI-Prozess in Rissen und Poren des Werkstoffes erzeugten weiteren Matrixanteil aus β-Siliciumcarbid.

Ein solcher Werkstoff weist eine überraschend hohe Wärmeleitfähigkeit sowohl bei Raumtemperatur als auch bei erhöhten Temperaturen (1000°C) und eine hohe mechanische Festigkeit auf. Vorteilhafte Ausführungsformen des erfindungsgemäßen Werkstoffes ergeben sich aus den Unteransprüchen 2 bis 10.

Gegenstand der Erfindung ist auch ein Verfahren zur Herstellung des beanspruchten Werkstoffes, wie es in den Ansprüchen 10 bis 13 definiert ist.

Gegenstand der Erfindung ist auch die Verwendung eines beanspruchten Werkstoffes zur Erzeugung von Bauteilen für Wärmekraftmaschinen, Wärmetauscher, Heißgasführungen und -düsen und von Komponenten von Plasma-Einschlussgefäßen thermonuklearer Fusionsanlagen.

Der Überzug aus β-Siliciumcarbid wird vorzugsweise simultan mit dem letzten Prozessschritt erzeugt.

Für das Fasergewebe bzw. -gelege werden Faserstränge von 800 bis 3000 Filamenten verwendet, um sicherzustellen, dass bei der Matrixinfiltration die Einzelfaser-Zwischenräume mit der SiC-Matrix durchdrungen werden. Faserstränge mit größerer Anzahl von Filamenten können nicht mehr gleichmäßig mit Matrix infiltriert werden und führen zu einem zur Strangmitte zu abfallenden Gradienten an abgeschiedener SiC-Menge, die im Kernbereich der Faserstränge nicht mehr zur Überbrückung der Faserzwischenräume ausreichen würde.

Als Verstärkungsfasern werden vorzugsweise polykristalline, stöchiometrisch zusammengesetzte Silicium-Carbidfasern, wie sie beispielsweise unter den Handelsnamen Sylramic® oder Tyranno SA®, die bei Raumtemparatur eine Wärmeleitfähigkeit von etwa 64 W/mK aufweisen, bekannt sind. Kohlenstofffasern mit entsprechend guter oder sogar noch höherer Wärmeleitfähigkeit, wie etwa die als Granoc® bezeichneten Graphitfasern mit einer Wärmeleitfähigkeit von 500 W/mK, können ebenfalls verwendet werden.

Eine C/SiC-Verbundkeramik kann aber gegenüber einer SiC/SiC-Verbundkeramik insofern nachteilig sein, als sie aufgrund der unterschiedlichen thermischen Ausdehnungskoeffizienten der Kohlenstofffasern und der SiC-Matrix (α_{Matrix} > α_{Faser}) Matrixrisse aufweist, die beim Abkühlen von der Herstellungstemperatur entstehen. Diese Risse behindern die Wärmeleitung durch die Matrix, deren Leitfähigkeit eigentlich höher wäre als die der Fasern. Für die Anwendung als Wandmaterial in Plasma-Fusionsanlagen sind Kohlenstofffasern im Vergleich zu Siliciumcarbidfasern darüber hinaus auch bezüglich ihres Schwellungsverhaltens unter Neutroneneinwirkung ungünstiger.

Das aus den Fasern gebildete dreidimensionale Gewebe oder Gelege umfasst mindestens 35 Vol % Fasern, wobei mindestens 10 % dieser Fasermenge in Richtung der Dicke des Gewebes bzw. Geleges orientiert ist. Die Wärmeleitfähigkeit des fertigen Verbundes wird nicht nur durch die US.W. in Richtung der Dicke orientierten Fasern verbessert, sondern zusätzlich durch die darauf im Gasphaseninfiltrationsprozess abgeschiedene Siliciumcarbid-Matrix erhöht. Mit anderen Worten, durch den Gasphaseninfiltrationsprozess (CVI-Prozess) wird eine Beschichtung der Faseroberflächen und damit eine Fortführung der vorgelegten Struktur erreicht.

Erfindungsgemäß werden die Fasern auch mit einer dünnen (etwa 100 nm) Kohlenstoffschicht überzogen, um die beim Auftreten von mechanischen Spannungen, die zur Bildung von Matrixrissen führen, erforderliche Trennung von Matrix und Fasern zu gewährleisten. Das ist der grundlegende Mechanismus für das pseudoplastische Verhalten und die davon abhängende Dehnungsund Schadenstoleranz von Faserverbundkeramiken. Auch feindisperse Kohlenstoff/Siliciumcarbid-Mischschichten oder mehrlagige, abwechselnd aus Kohlenstoff und Siliciumcarbid aufgebaute Schichten, wie sie aus der Literatur bekannt sind, können für die Einstellung dieser Funktion verwendet werden.

Das an dem Fasergelege bzw. -gewebe durchgeführte Gasphaseninfiltrationsverfahren führt zu einem durchgängigen Skelett mit kristallinem, in sich dichtem Gefüge aus β-Siliciumcarbid, das aufgrund seiner Dichte eine gute Wärmeleitung zeigt. Zusammen mit den Fasern ist dieses Siliciumcarbid-Skelett der wesentliche Träger der Wärmeleitung durch eine Materialwand aus dem erfindungsgemäßen Werkstoff.

Für den Aufbau dieses Skelettes wird erfindungsgemäß das Gradienten-CVI-Verfahren eingesetzt, vorzugsweise jedoch eine Verfahrensweise, wie sie in der deutschen Patentanmeldung 101 01 546.1 beschrieben ist. Hier lässt man zur CVI-Abscheidung einen Siliciumcarbid-Prekursor in einem geeigneten Trägergas unter einem Prozessdruck von ≥ 0,6 bar absolut und einer Prozesstemperatur von ≥ 1100°C auf das Fasergelege bzw. -gewebe einwirken. Bevorzugte Verfahrensparameter sind ein H₂/CH₃Cl₃Si-Verhältnis von 4:1, eine Prozesstemperatur von 1100 bis 1200°C und ein Prozessdruck von zwischen 600 bis 800 mbar.

Der Matrixanteil, welcher durch das Polymerinfiltrations- und Pyrolyseverfahren aufgebaut wird und auf einer Suspension von Silciumcarbid-Pulver in einem Polymer basiert, dient zur Füllung der großvolumigen Poren in den verwendeten Geweben bzw. Gelegen und als Substrat für das in dem zweiten, nachfolgenden Gasphaseninfiltrationsprozess abgeschiedene Siliciumcarbid.

Als Siliciumcarbid-Pulver wird β-Siliciumcarbid mit einer Korngröße von ≤ 1 µm, bevorzugt 0,3 µm, verwendet. Es wird in einem Dispergiergerät in ein siliciumorganisches Polymer zusammen mit einer geringen Menge Toluol (zur Absenkung der Viskosität) homogen eingemischt. Das siliciumorganische Polymer ist eine Vorstufe von Siliciumcarbid, das daraus durch thermische Zersetzung unter Luftausschluss gebildet wird und als Bindemittel wirkt. Das Polymer wird dabei so ausgewählt, dass daraus bei einer möglichst niedrigen Pyrolysetemperatur kristallines β-Siliciumcarbid entsteht. Als vorteilhaft haben sich Methyl-, Vinyl- und/oder Methylvinylpolycarbosilan erwiesen, mit denen ab einer Temperatur von 1300°C kristallines Siliciumcarbid entsteht. Mit Polytitanocarbosilan kann sogar schon ab etwa 1200°C kristallines Siliciumcarbid gebildet werden, es muss jedoch ein Gehalt an Titanoxid in Kauf genommen werden. Die besten Ergebnisse bei der Erzeugung von reinem β-Siliciumcarbid hat man bei der Verwendung von Allylhydridopolycarbosilan erhalten, obwohl hier eine Temperatur von mindestens 1600°C erforderlich ist. Da bei dickwandigen Bauteilen längere Einwirkungszeiten erforderlich sind, kann es also zu einer Schädigung der Siliciumcarbid-Fasern kommen.

Zur Erniedrigung der zu kristallinem Siliciumcarbid führenden Temperatur ist es vorteilhaft, zusätzlich Siliciumcarbid-Feinstpulver, sogenanntes Nanopulver, mit einer Korngröße von 30 nm einzusetzen. Dieses besonders sinteraktive Pulver unterstützt die Ausbildung von Sinterbrücken zwischen den Körnern des gröberen Pulvers. Es unterstützt auch die Kristallisation des durch Pyrolyse aus dem siliciumorganischen Polymer erzeugten Feststoffes zu dem erwünschten β-Siliciumcarbid. Es ist jedoch darauf zu achten, nur geringe Mengen eines solchen Nanopulvers zu verwenden, da es bei dem hier angewendeten drucklosen Sintern in größeren Volumeneinheiten zu einem mikroporösen Produkt führt, das dann die Wärmeleitfähigkeit beeinträchtigt.

Die Poren des im CVI-Prozess mit Siliciumcarbid infiltrierten Verbundmateriales werden mit dem Schlicker aus Siliciumcarbidpulver und 45 Masse-% siliciumorganischem Polymer im Vakuum imprägniert. Nach der Trocknung wird eine Temperaturbehandlung unter Argonatmosphäre durchgeführt. Die Aufheizung wird stufenweise mit Haltephasen bei 300 und 600°C bis zur Kristallisationstemperatur, also zum Beispiel 1400°C, bei Verwendung von Methylpolycarbosilan als Siliciumcarbidvorstufe vorgenommen. Nach einer Haltezeit von 30 Min. wird abgekühlt. Es werden höchstens zwei Imprägnier- und Pyrolysezyklen, bevorzugt aber nur einer, durchgeführt.

Das durch den Schwund des siliciumorganischen Harzes im Pyrolyseprozess und den Sinterschwund des Siliciumcarbids entstandene freie Volumen wird durch neuerliche Gasphaseninfiltration mit dem oben bereits erwähnten Prozess mit β-Siliciumcarbid gefüllt. Da der Brennschwund im vorangegangenen Prozessschritt ein zusammenhängendes Netzwerk von Rissen und Porenkanälen hinterlassen hat, schafft die Abscheidung des Siliciumcarbids aus der Gasphase an den Rissflanken und Kanalwänden ein entsprechend durchgängiges System von Siliciumcarbid-Adern, so dass ein sogenannter Durchdringungsverbund erzeugt wird. Im Hinblick auf die gewünschte hohe Wärmeleitfähigkeit ist hier von Vorteil, dass das zuvor im Polymerinfiltrations- und Pyrolyseprozess erzeugte kristalline Siliciumcarbid die Keimbildung und das Kristallwachstum des aus der Gasphase abgeschiedenen β-Siliciumcarbids günstig beeinflusst und so eine innige Verbindung und ein reines Siliciumcarbid mit Korngrenzen, die von Fremdphasen, wie Kohlenstoff, frei sind, erhalten wird.

Der letzte CVI-Prozessschritt führt wegen der bereits verminderten Porosität und damit Infiltrierbarkeit in der Schlussphase des Prozesses auch zu einem Überzug aus Siliciumcarbid, der die Gesamtwärmeleitfähigkeit des Bauteils günstig beeinflusst und zudem eine Versiegelung bewirkt.

Nachfolgend wird die Erfindung anhand eines Ausführungsbeispieles, das den Umfang der Erfindung in keiner Weise beschränken soll, erläutert.

### Ausführungsbeispiel

Ein plattenförmiges, in zwei Raumrichtungen gekrümmtes Bauteil aus einer SiC/SiC-Faserverbundkeramik wurde wie folgt hergestellt:

Ein dreidimensionales Gewebe aus den hochtemperaturbeständigen Siliciumcarbidfasern Tyranno SA® mit jeweils 45 % Faseranteil in x- und y-Richtung und 10 % Fasern in z-Richtung (= Dicke) mit den Maßen 350 mm x 250 mm x 3 mm, wurde im angewärmten Zustand mit einem pulverigen Phenolharz bestreut, das dabei klebrig anhaftete. Das derart vorbehandelte Gewebestück wurde in einer Warmpresse mit entsprechend der gewünschten Bauteilgeometrie geformten Matrizen aus Aluminium in Form gepresst. Nach dem Erstarren des Harzes war das Gewebe in der Bauteilform fixiert. Diese Bauteil-Vorform wurde in einem Pyrolyseofen unter Argon bei 1100°C mit einer Haltezeit von 30 Min. thermisch stabilisiert. In diesem Zustand wurde die Vorform in eine CVI-Anlage eingebaut und die. Fasern wurden dann zunächst in Methanatmosphäre bei 30 mbar und 1100°C mit etwa 100 nm Pyrokohlenstoff beschichtet. Im nächsten Prozessschritt wurde auf die Kohlenstoffschicht mittels eines H₂/CH₃Cl₃Si-Gemisches im Verhältnis 4:1 unter einem Volumenstrom von 25 l/min. bei 1100°C eine Siliciumcarbid-Matrix abgeschieden. Die Dauer dieser ersten Gasphaseninfiltration mit Siliciumcarbid hat für die Wandstärke von 3 mm 22 Stunden betragen.

Die Bauteilkanten wurden auf ein die Dicke einer später aufzubringenden Siliciumcarbid-Schicht berücksichtigendes Untermaß besäumt. Das Bauteil wurde dann in einer Vakuumapparatur mit einer Mischung aus Methylvinylpolycarbosilan (55 Gew.%) und β-Siliciumcarbidpulver imprägniert. 50 % des Siliciumcarbidpulvers besitzen eine Korngröße von 0,3 µm, der Rest eine Korngröße von unter 1 µm. Danach wurde das Bauteil einer stufenweisen Temperaturbehandlung unter Argon bei 300, 600, 1100 und 1600°C mit jeweils 30 Min. Haltezeit unterzogen. Dadurch wurde eine Porenfüllung mit durchweg kristallinem β-Siliciumcarbid mit bimodaler Korngrößenverteilung erzeugt, wobei das aus dem siliciumorganischen Harz abgeleitete Siliciumcarbid eine Korngröße von unter 0,1 µm aufweist.

Der bei der Hochtemperaturbehandlung eingetretene erhebliche Masse- und Volumenschwund hat zur Bildung von Poren und Rissen in der in den Hohlräumen gebildeten Matrix geführt, die das gesamte, neu gebildete Siliciumcarbid-Gefüge durchziehen. In diese Risse und Poren wird in einem weiteren CVI-Prozessschritt, unter den gleichen Bedingungen wie oben, über die Gasphase Siliciumcarbid infiltriert. Der Prozess wurde jedoch auf 30 Stunden ausgedehnt und so die Bauteiloberfläche auch mit einer etwa 100 µm dicken Siliciumcarbidschicht überzogen.

Mit der beschriebenen Verfahrensweise und den genannten Einsatzstoffen wurde ein Produkt aus Faserverbundkeramik erzeugt, das durch folgenden Aufbau gekennzeichnet ist: Kristalline Siliciumcarbid-Fasern, die mit einer dünnen Schicht aus Pyrokohlenstoff überzogen und in Strängen von 800 bis 3000 Einzelfasern in alle drei Raumrichtungen orientiert sind, sind mit kolumnar und stark verzwillingt gewachsenem β-Siliciumcarbid dicht umhüllt, das im Inneren der Faserbündel wenige µm Dicke aufweist, aber eine stoffschlüssige Verbindung der Einzelfasern bewirkt und in den Außenbereichen der Faserbündel bis zu etwa 10 µm dick ist. Die vom Gewebeaufbau herrührenden Porenvolumina zwischen den sich kreuzenden Fäden sind mit kristallinem β-Siliciumcarbid mit einer Korngröße von ≤ 1 µm gefüllt. Das Gefüge dieser Porenfüllung ist von einem Netzwerk von Schwundrissen und -poren durchzogen. Diese wiederum sind durchsetzt von dicht gewachsenem, stark verzwillingtem, aus der Gasphase abgeschiedenem Siliciumcarbid. Im Bauteilaußenbereich geht diese Riss- und Porenfüllung übergangslos in eine äußere Deckschicht über. Wenn das Bauteil aus Passungsgründen eine Oberflächenbearbeitung erfahren hat und eine gesonderte Beschichtung durchgeführt werden muss, ist das Siliciumcarbid vollkommen dicht aufgewachsen, obwohl eine durch die neue Keimbildung hervorgerufene Grenzlinie erkennbar ist.

Messungen an einem erfindungsgemäßen Werkstück haben bei.Raumtemperatur eine Temperaturleitfähigkeit von 0,2 und bei 1000°C von 0,08 cm²/s in Richtung der Dicke ergeben. Daraus errechnet sich mit der festgestellten Dichte von 2,78 g/cm³ und einer spezifischen Wärmekapazität von 650 J/kgK bei Raumtemperatur und 1000 J/kgK bei 1000°C eine Wärmeleitfähigkeit von 36 W/mK bei Raumtemperatur und von 22 W/mK bei 1000°C.

Als mechanische Kennwerte des erfindungsgemäßen Materials wurden eine Zugfestigkeit in x- und y-Richtung von 310 MPa, eine Biegefestigkeit von 630 MPa, eine Druckfestigkeit von 680 MPa und eine interlaminare Scherfestigkeit von 65 MPa ermittelt.

Somit wurden die für die eingangs erwähnte Hochtemperaturanwendung geforderten Materialeigenschaften, nämlich eine hohe Wärmeleitfähigkeit in Verbindung mit einer hohen mechanischen Festigkeit, erzielt.

## Patentansprüche

1. Hochwärmeleitfähiger Werkstoff aus einer Faserverbundkeramik, aufgebaut aus
einem dichten Gewebe oder Gelege aus polykristallinen, stöchiometrisch zusammengesetzten Silicium-Carbidfasern, die bei Raumtemperatur, eine Wärmeleitfähigkeit von etwa 64 W/mk aufweisen, oder Kohlenstoff-Fasern einer thermischen Leitfähigkeit von ≥ 64 W/mK, welche dreidimensional orientiert sind, wobei das Gewebe oder Gelege mindestens 35 Vol % Fasern umfasst, wovon mindestens 10 % in Richtung der Dicke des Werkstoffes orientiert sind, einer in einem CVI-Prozess im Wesentlichen auf den Fasern erzeugten kristallinen Matrix aus β-Siliciumcarbid, einem in einem Polymerinfiltrations- und Pyrolyseprozess, ausgehend von einer Suspension von Siliciumcarbid-Pulver mit einem Korngrößenintervall von 0,3 µm bis 1,0 µm in einem Polymer, in Poren der Gewebe- bzw. Gelegestruktur erzeugten Matrixanteil aus β-Siliciumcarbid und einem in einem CVI-Prozess in Rissen und Poren des Werkstoffes erzeugten weiteren Matrixanteil aus β-Siliciumcarbid.

2. Werkstoff nach Anspruch 1, **dadurch gekennzeichnet, dass** der Werkstoff mit einem Überzug aus β-Siliciumcarbid beschichtet ist.

3. Werkstoff nach Anspruch 1 oder 2, **dadurch gekennzeichnet, dass** das Gewebe bzw. Gelege aus Fasersträngen mit 800 bis 3000 Filamenten gebildet ist.

4. Werkstoff nach einem der Ansprüche 1 bis 3, **dadurch gekennzeichnet, dass** das Gewebe bzw. Gelege aus Siliciumcarbidfasern und/oder Kohlenstofffasern gebildet ist.

5. Werkstoff nach einem der Ansprüche 1 bis 4, **dadurch gekennzeichnet, dass** zwischen den Fasern und der sie umgebenden kristallinen Matrix aus β-Siliciumcarbid eine dünne Schicht aus Kohlenstoff, feindispersem Kohlenstoff/Siliciumcarbid-Gemisch oder alternierende Schichten aus Kohlenstoff und/oder Siliciumcarbid angeordnet ist bzw. sind.

6. Werkstoff nach einem der Ansprüche 1 bis 5, **dadurch gekennzeichnet, dass** das Polymer ein siliciumorganisches Polymer ist, das aus der Gruppe ausgewählt ist, die aus Methyl-, Vinyl- und/oder Methylvinylpolycarbosilan, Polytitancarbosilan und/oder Allylhydridopolycarbosilan gebildet ist.

7. Werkstoff nach Anspruch 6, **dadurch gekennzeichnet, dass** das Polymer neben dem SiC-Pulver SiC-Feinstpulver in einer Korngröße von 30 nm umfasst.

8. Verfahren zur Herstellung eines Werkstoffes nach einem der Ansprüche 1 bis 7, **dadurch gekennzeichnet, dass** man zur CVI-Abscheidung ein Gradienten-Verfahren verwendet.

9. Verfahren nach Anspruch 8, **dadurch gekennzeichnet, dass** man zur CVI-Abscheidung einen Siliciumcarbid-Prekursor in einem geeigneten Trägergas unter einem Prozessdruck von ≥ 0,6 bar absolut und einer Prozesstemperatur von ≥ 1.100°C einwirken lässt.

10. Verfahren nach Anspruch 9, **gekennzeichnet durch** folgende Parameter
H₂: CH₃ Cl₃Si = 4:1
T = 1100 bis 1200°C
P = 600 bis 800 mbar

11. Verfahren nach einem der Ansprüche 8 bis 10, **dadurch gekennzeichnet, dass** der Pyrolyseschritt des Polymerinfiltrations- und Pyrolyseverfahrens eine stufenweise Aufheizung auf 300, 600, 1100 und 1600°C bei jeweiligen Haltezeiten von 1/2 h umfasst.

12. Verwendung eines Werkstoffes nach einem der Ansprüche 1 bis 7 zur Erzeugung von Bauteilen für Wärmekraftmaschinen, Wärmetauscher, Heißgasführungen und -düsen.

13. Verwendung eines Werkstoffes nach einem der Ansprüche 1 bis 7 zur Erzeugung von Komponenten von Plasma-Einschlussgefäßen thermonuklearer Fusionsanlagen.

## Claims

1. High temperature thermal conducting material constructed from a fiber composite ceramic of
a thick fabric or interlaid scrim of polycrystalline, stochiometrically assembled silicon carbide fibers that at room temperature have a thermal conductivity of approximately 64 W/mK, or carbon fibers with a thermal conductivity of 64 W/mK, that are three-dimensionally oriented, with the fabric or interlaid scrim having at least 35% by volume of fiber, of which at least 10% is oriented in the direction of the thickness of the material, a crystalline matrix of β silicon carbide essentially created in a CVI process on the fibers, a matrix component of β silicon carbide generated in a polymer infiltration and pyrolysis process, starting from a suspension of silicon carbide powder with a grain size interval of 0.3 µm to 1.0 µm in a polymer, in pores of the fabric or interlaid scrim structure, and a further matrix component of β silicon carbide generated in a CVI process in cracks and pores of the material.

2. Material in accordance with claim 1, **characterized in that** the material is coated with a coating of β silicon carbide.

3. Material in accordance with claim 1 or 2, **characterized in that** the fabric or interlaid scrim is formed from fiber strands with 800 to 3000 filaments.

4. Material in accordance with one of claims 1 to 3, **characterized in that** the fabric or interlaid scrim is formed from silicon carbide fibers and/or carbon fibers.

5. Material in accordance with one of claims 1 to 4, **characterized in that** between the fibers and the surrounding crystalline matrix of β silicon carbide a thin layer of carbon, finely dispersed carbon/silicon carbide mixture or alternate layers of carbon and/or silicon carbide are/is arranged.

6. Material is accordance with one of claims 1 to 5, **characterized in that** the polymer is a silicon organic polymer selected from the group formed from methyl, vinyl and/or methyl vinyl polycarbosilane, polytitanium carbosilane and/or allyl hydrido polycarbosilane.

7. Material in accordance with claim 6, **characterized in that** the polymer has, in addition to the SiC powder, SiC fine powder with a grain size of 30 nm.

8. Method for manufacturing a material in accordance with one of claims 1 to 7, **characterized in that** a gradient method is used for the CVI separation.

9. Method in accordance with claim 8, **characterized in that** for the CVI separation a silicon carbide precursor is allowed to act in a suitable carrier gas under a process pressure of 0.6 bar absolute and a process temperature of 1,100°C.

10. Method in accordance with claim 9, **characterized by** the following parameters
H₂: CH₃ Cl₃Si = 4:1
T = 1100 to 1200°C
P = 600 to 800 mbar

11. Method in accordance with one of claims 8 to 10, **characterized in that** the pyrolysis stage of the polymer infiltration and pyrolysis process includes heating by stages to 300, 600, 1100 and 1600°C with dwell times of 1/2 h in each case.

12. Use of a material in accordance with one of claims 1 to 7 for the production of components for heat engines, heat exchangers, hot gas ducts and hot gas nozzles.

13. Use of a material in accordance with one of claims 1 to 7 for the production of components of plasma-enclosing vessels of thermonuclear fusion plants.

## Revendications

1. Matériau à haute conductivité thermique, formé en une céramique composite à base de fibres, composée d' :
un tissu ou nappe étanche formée de fibres en carbure de silicium, de composition stoechiométrique, polycristallines, présentant à la température ambiante une conductivité thermique d'environ 64W/mK, ou de fibres de carbone d'une conductivité thermique ≥ 64W/mK, orientées tridimensionnellement, le tissu ou la nappe comprenant au moins 35 % en volume de fibres, dont au moins 10 % sont orientés dans la direction de l'épaisseur du matériau, d'une matrice cristalline de carbure de silicium β produite dans un procédé CVI essentiellement sur les fibres, d'une partie de matrice formée de carbure de silicium β, produite dans des pores de la structure en tissu ou en nappe, en un processus à infiltration de polymère et de pyrolyse, en partant d'une suspension, dans un polymère, de poudre de carbure de silicium d'un intervalle de taille de grains de 0,3 µm à 1,0 µm, et d'une autre partie de matrice en carbure de silicium β, produite dans un procédé CVI, dans des fissures et des pores du matériau.

2. Matériau selon la revendication 1, **caractérisé en ce que** le matériau est recouvert d'une couche de revêtement en carbure de silicium β.

3. Matériau selon la revendication 1 ou 2, **caractérisé en ce que** le tissu ou la nappe est formé(e) de brins de fibres comprenant de 800 à 3000 filaments.

4. Matériau selon l'une des revendications 1 à 3, **caractérisé en ce que** le tissu ou la nappe est formé (e) de fibres de carbure de silicium et/ou de fibres de carbone.

5. Matériau selon l'une des revendications 1 à 4, **caractérisé en ce que**, entre les fibres et la matrice cristalline en carbure de silicium β les entourant, est, respectivement sont, disposé(s) une couche mince en carbone, un mélange de carbone/carbure de silicium finement dispersé, ou une alternance de couches en carbone et/ou en carbure de silicium.

6. Matériau selon l'une des revendications 1 à 5, **caractérisé en ce que** le polymère est un polymère organique à base de silicium, sélectionné dans le groupe formé du méthyl-, vinyl- et/ou méthylvinylpolycarbosilane, polytitancarbosilane et/ou allylhydridopolycarbosilane.

7. Matériau selon la revendication 6, **caractérisé en ce que** le polymère comprend, outre la poudre de SIC, une poudre de SIC extrêmement fibre d'une taille de grain de 30 nm.

8. Procédé de fabrication d'un matériau selon l'une des revendications 1 à 7, **caractérisé en ce qu'**on utilise un procédé à gradient pour la déposition CVI.

9. Procédé selon la revendication 8, **caractérisé en ce que**, pour effectuer le déposition CVI, on laisse agir un précurseur de carbure de silicium dans un gaz porteur approprié, sous une pression de processus ≥ 0,6 bar absolu et une température de processus ≥ 1.100°C.

10. Procédé selon la revendication 9, **caractérisé par** les paramètres suivants :
H₂: CH₃ Cl₃Si = 4:1
T = 1100 à 1200°C
P = 600 à 800 mbar

11. Procédé selon l'une des revendications 8 à 10, **caractérisé en ce que** l'étape de pyrolyse du procédé à infiltration de polymère et pyrolyse comprend un chauffage échelonné, à 300, 600, 1100 et 1600°C, avec des temps de maintien respectifs de 1/2 h.

12. Utilisation d'un matériau selon l'une des revendications 1 à 7, pour produire des composants pour des machines ou moteurs thermiques, des échangeurs de chaleur, des guidages et des buses pour gaz très chaud.

13. Utilisation d'un matériau selon l'une des revendications 1 à 7, pour produire des composants de récipients à confinement de plasma, dans des installations de fusion thermonucléaire.
